(19)

(11) **EP 3 913 775 B1**

(12) **EUROPEAN PATENT SPECIFICATION**

(45) Date of publication and mention of the grant of the patent:
**01.11.2023 Bulletin 2023/44**

(21) Application number: **20741297.4**

(22) Date of filing: **16.01.2020**

(51) International Patent Classification (IPC):
***H02K 7/14*** *(2006.01)* ***F02M 37/08*** *(2006.01)*
***F02M 37/10*** *(2006.01)* ***F04D 29/00*** *(2006.01)*
***H02K 1/17*** *(2006.01)* ***H02K 5/15*** *(2006.01)*
***F04D 5/00*** *(2006.01)* ***F04D 29/62*** *(2006.01)*
***H02K 1/18*** *(2006.01)* ***H02K 5/04*** *(2006.01)*
***H02K 5/14*** *(2006.01)*

(52) Cooperative Patent Classification (CPC):
**F04D 29/628; F02M 37/08; F02M 37/10; F04D 5/002; H02K 1/17; H02K 1/185; H02K 5/04; H02K 5/143; H02K 5/15;** H02K 2213/03

(86) International application number:
**PCT/JP2020/001380**

(87) International publication number:
**WO 2020/149383 (23.07.2020 Gazette 2020/30)**

(54) **MOTOR UNIT AND LIQUID SUPPLY DEVICE**

MOTOREINHEIT UND FLÜSSIGKEITSVERSORGUNGSVORRICHTUNG

BLOC MOTEUR ET DISPOSITIF D’ALIMENTATION EN LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2019 JP 2019005221**

(43) Date of publication of application:
**24.11.2021 Bulletin 2021/47**

(73) Proprietor: **Mitsuba Corporation**
**Kiryu-shi, Gunma 376-8555 (JP)**

(72) Inventors:
- **TAKEUCHI, Naoki**
**Kiryu-shi, Gunma 376-8555 (JP)**
- **HORISOKO, Shinichiro**
**Kiryu-shi, Gunma 376-8555 (JP)**

(74) Representative: **Daub, Thomas**
**Patent- und Rechtsanwaltskanzlei Daub**
**Bahnhofstrasse 5**
**88662 Überlingen (DE)**

(56) References cited:
**EP-A1- 0 496 075** **WO-A1-2009/133648**
**DE-A1- 19 614 217** **JP-A- 2001 309 586**
**JP-A- 2010 183 798** **JP-A- 2010 183 798**
**JP-U- S53 136 508** **KR-A- 20100 126 983**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 913 775 B1

**Description**

TECHNICAL FIELD

The present invention relates to a motor unit and a liquid supply device.

BACKGROUND ART

For example, a liquid supply device for a vehicle such as a motorcycle or a four-wheeled vehicle includes a fuel pump that is configured to suction fuel from a fuel tank and that is configured to pressure-feed the fuel toward an engine. The fuel pump includes a pump portion and a motor portion that is configured to drive the pump portion.

For example, a non-positive displacement type pump having an impeller is used as the pump portion. Such a pump portion includes an impeller and a pump case formed in a manner of covering the entire impeller.

For example, a brush-equipped motor is used as the motor portion. Such a motor portion includes a yoke having a cylindrical shape, a permanent magnet fixed to an inner peripheral surface of the yoke, an armature rotatably supported in the yoke, and a brush for supplying electric power to the armature. The yoke is formed into a cylindrical shape by bending a single metal plate or the like. The brush is biased toward a commutator of the armature by a spring or the like, and is electrically connected to an external power supply.

The pump case and the yoke are arranged and overlapped in a coaxial manner, and then the pump portion and the motor portion are accommodated in a housing having a cylindrical shape. The pump portion and the motor portion are integrated by crimping an end portion in an axial direction of the housing.

With such a configuration, when the impeller is rotationally driven by the motor portion, fuel in the fuel tank is suctioned into the pump portion. Thereafter, the fuel passes through the motor portion, is discharged from a discharge pipe provided in the fuel pump, and is pressure-fed to the engine.

CITATION LIST

PATENT LITERATURE

Patent Literature 1: JP-A-2010-183798

SUMMARY OF INVENTION

TECHNICAL PROBLEM

In order to coaxially arrange the pump portion and the motor portion, the yoke and the pump case may be fitted to each other. In order to position the yoke and the pump case in a peripheral direction, the yoke and the pump case may be provided with a protrusion portion and a recessed portion, so that the yoke and the pump case is fitted to each other by fitting the protrusion portion and the recessed portion. For example, when a progressive press working device or the like is used to improve productivity of the yoke, a protrusion or the like for positioning the yoke relative to the working device may be provided on the yoke.

When such a structure is simply adopted, a biasing force of the brush to the commutator and a fixing strength of the pump portion and the motor portion relative to the housing may be unstable. Further, performance of the motor portion may deteriorate.

Therefore, an object of the present invention is to provide a motor unit and a liquid supply device that can stabilize a fixing strength relative to a housing while positioning each portion and can improve motor performance.

SOLUTION TO PROBLEM

A motor unit according to a first aspect of the present invention includes

a housing having a cylindrical shape,
a bracket that has a disc shape and that is fitted to an inner peripheral surface of the housing, and
a motor portion disposed in the housing and disposed coaxially with the bracket, in which
the motor portion includes

> a yoke that is fitted to the inner peripheral surface of the housing and that is formed of a single metal plate bent into a cylindrical shape, and
> a plurality of permanent magnets disposed on an inner peripheral surface of the yoke,

an end surface in an axial direction of the bracket and one end portion of the yoke at a side of the bracket are brought into contact with each other,
the housing includes a first positioning portion that is formed at a position corresponding to the bracket and that is configured to position the housing and the bracket,
the yoke includes

> a plurality of first positioning protrusions that are provided in a manner of protruding from the one end portion toward the side of the bracket at positions avoiding an abutting surface of the metal plate, and that is configured to position relative to the bracket, and
> a plurality of second positioning protrusions that are provided in a manner of protruding from the one end portion toward the side of the bracket at positions avoiding the abutting surface, and that is configured to position relative to a device that is configured to convey the yoke,

the bracket includes

a second positioning portion configured to be engaged with the first positioning portion, and
a plurality of positioning recessed portions into which the plurality of first positioning protrusions are respectively inserted,

the second positioning portion and one of the plurality of positioning recessed portions are distributed and arranged at two sides of a rotation shaft of the motor portion,
when the number of the first positioning protrusions is set to N1, an angle in a peripheral direction between the adjacent first positioning protrusions around the rotation shaft is 360°/N1 - 30° or more and 360°/N1 + 30° or less,
when the number of the second positioning protrusions is set to N2, an angle in the peripheral direction between the adjacent second positioning protrusions is 360°/N2 - 30° or more and 360°/N2 + 30° or less, and
the first positioning protrusions, the second positioning protrusions, and the first positioning portion are disposed at positions that do not overlap with one another in any of the peripheral direction, a radial direction, and the axial direction.

With such a configuration, positions of the first positioning protrusions and the second positioning protrusions relative to the yoke can be optimized, and positions of the second positioning portion and the positioning recessed portions relative to the bracket can be optimized. Therefore, it is possible to stabilize the fixing strength of the yoke and the bracket relative to the housing while positioning the housing, the yoke, and the bracket.

According to a second aspect of the present invention, in the first aspect,

each of the number of the first positioning protrusions, the number of the second positioning protrusions, and the number of the positioning recessed portions is three, and
one of the three positioning recessed portions and the second positioning portion are disposed in a manner of facing each other in the radial direction around the rotation shaft.

With such a configuration, it is possible to reliably stabilize the fixing strength of the yoke and the bracket relative to the housing while positioning the housing, the yoke, and the bracket. In addition, it is possible to reliably improve the motor performance of the motor unit.

According to a third aspect of the present invention, in the first aspect or the second aspect,

the first positioning portion is a protrusion portion that protrudes from the inner peripheral surface of the housing, and
the second positioning portion is a recessed portion into which the first positioning portion can be inserted.

The housing having a cylindrical shape is easily formed with a protrusion portion by performing press working or the like. On the other hand, when the recessed portion is formed in the bracket, various processing methods such as forging, heading, and casting can be adopted. Therefore, manufacturing costs of the motor unit can be reduced, and variations of a manufacturing method of the motor unit can be increased.

According to a fourth aspect of the present invention, in any one of the first to third aspects,
a center of the permanent magnet in the peripheral direction is located in a range in which an angle in the peripheral direction relative to the abutting surface of the metal plate is - 30° or more and +30° or less.

With such a configuration, a position of the permanent magnet relative to the yoke can be optimized, and an effective magnetic flux of the permanent magnet can be utilized to the maximum extent. Therefore, the motor performance of the motor unit can be improved.

A liquid supply device according to a fifth aspect of the present invention includes

the motor unit according to any one of the first to fourth aspects, and
a pump portion that is configured to be driven by the motor portion and that is configured to pressure-feed liquid, in which
the bracket is a case of the pump portion.

With such a configuration, it is possible to stabilize the fixing strength of the motor portion and the pump portion relative to the housing while positioning the motor portion and the pump portion. In addition, it is possible to improve motor performance of the liquid supply device.

ADVANTAGEOUS EFFECTS OF INVENTION

According to the present invention, it is possible to stabilize the fixing strength of the yoke and the bracket relative to the housing while positioning the housing, the yoke, and the bracket. In addition, the position of the permanent magnet relative to the yoke can be optimized, and an effective magnetic flux of the permanent magnet can be utilized to the maximum extent. Therefore, the motor performance of the motor unit can be improved.

BRIEF DESCRIPTION OF DRAWINGS

[FIG. 1] FIG. 1 is a perspective view of a liquid supply device according to an embodiment of the present invention.

[FIG. 2] FIG. 2 is a cross-sectional view taken along an axial direction of the liquid supply device according to the embodiment of the present invention.

[FIG. 3] FIG. 3 is a perspective view of the liquid supply device in a state where a housing is removed, according to the embodiment of the present invention.

[FIG. 4] FIG. 4 is an exploded perspective view of the housing, a yoke, and a pump case according to the embodiment of the present invention.

[FIG. 5] FIG. 5 is a plan view of the yoke according to the embodiment of the present invention when viewed from a pump portion side.

[FIG. 6] FIG. 6 is a plan view of a motor portion according to the embodiment of the present invention when viewed from the pump portion side.

[FIG. 7] FIG. 7 is a plan view of an upper case according to the embodiment of the present invention when viewed from above in the axial direction.

DESCRIPTION OF EMBODIMENTS

Next, an embodiment of the present invention will be described with reference to the drawings.

(Liquid Supply Device)

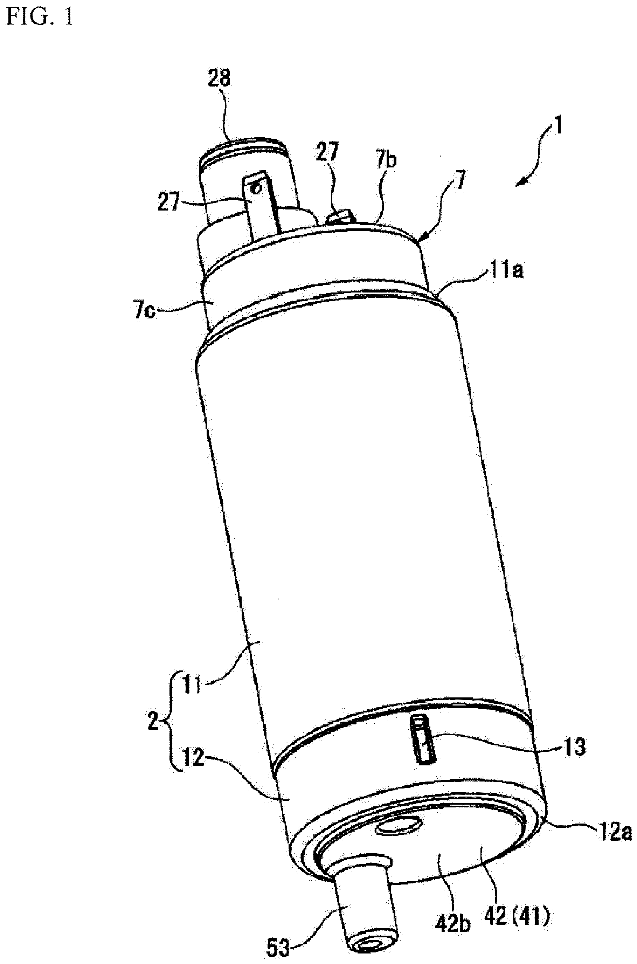

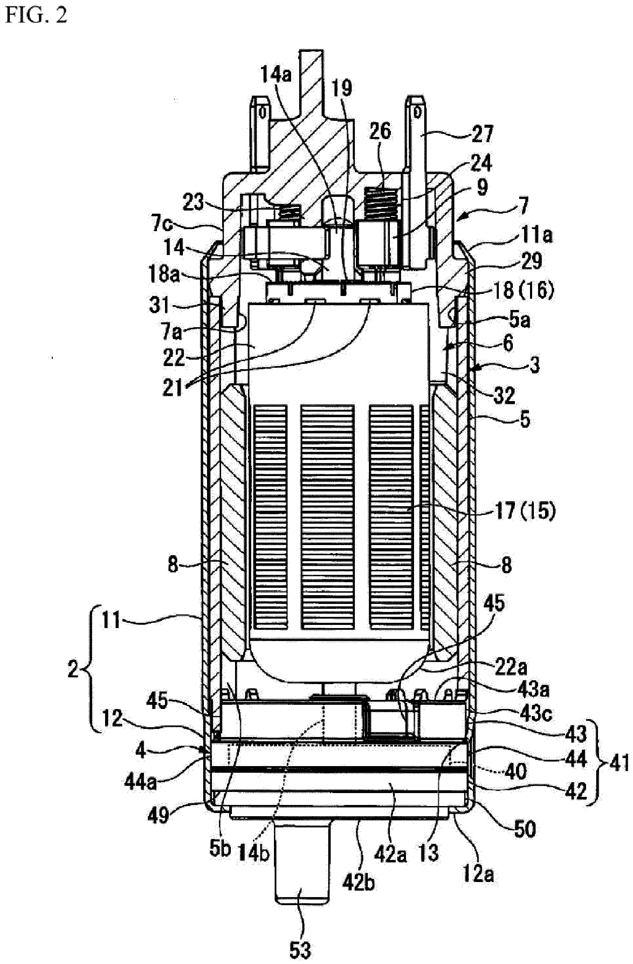

FIG. 1 is a perspective view of a liquid supply device 1. FIG. 2 is a cross-sectional view taken along an axial direction of the liquid supply device 1.

The liquid supply device 1 is used as a fuel pump for a vehicle such as a motorcycle and a four-wheeled vehicle. The liquid supply device 1 is a so-called in-tank type fuel pump disposed in a fuel tank (not shown).

As shown in FIGS. 1 and 2, the liquid supply device 1 includes a housing 2 that is formed of metal and is formed into a substantially cylindrical shape, a motor portion 3, and a pump portion 4. The motor portion 3 and the pump portion 4 are fitted to an inner peripheral surface of the housing 2 and are arranged side by side in an axial direction of the housing 2. The housing 2, the motor portion 3, and the pump portion 4 are coaxially arranged.

The liquid supply device 1 is used with the pump portion 4 facing downward in the direction of gravity. Therefore, a motor portion 3 side may be referred to as an upper side and a pump portion 4 side may be referred to as a lower side in the following description. In the following description, an axial direction of the housing 2, the motor portion 3, and the pump portion 4 is simply referred to as an axial direction, a radial direction of the housing 2, the motor portion 3, and the pump portion 4 is simply referred to as a radial direction, and a peripheral direction of the housing 2, the motor portion 3, and the pump portion 4 is simply referred to as a peripheral direction.

The housing 2 is formed by integrally molding a motor fitting portion 11 to which the motor portion 3 is fitted and a pump fitting portion 12 that is formed to have a smaller diameter than the motor fitting portion 11 via a step and to which the pump portion 4 is fitted. A first positioning protrusion portion (a first positioning portion in the claims) 13 protruding inward in the radial direction is formed on an inner peripheral surface of the pump fitting portion 12. The first positioning protrusion portion 13 is formed by pressing the housing 2 from an outer side in the radial direction by press working or the like. The first positioning protrusion portion 13 is formed into a rectangular shape that is long in the axial direction when viewed from the radial direction. An inner flange portion 12a that extends inward in the radial direction is bent and extended from a lower end of the pump fitting portion 12 of the housing 2. The first positioning protrusion portion 13 and the inner flange portion 12a are used for positioning the housing 2 and the pump portion 4.

For example, a brush-equipped motor is adopted as the motor portion 3. The motor portion 3 mainly includes a yoke 5 that has a substantially cylindrical shape, a permanent magnet 8 provided on an inner peripheral surface of the yoke 5, an armature 6 rotatably provided in the yoke 5, an outlet cover 7 that closes an upper opening 5a of the yoke 5, and a brush 9 accommodated in the outlet cover 7.

The armature 6 mainly includes a rotation shaft 14, an armature core 15 fitted and fixed to an outer peripheral surface of the rotation shaft 14, and a commutator 16 fitted and fixed to the outer peripheral surface of the rotation shaft 14 at a position closer to the outlet cover 7 than the armature core 15.

The armature core 15 has a plurality of teeth 17 extending radially outward in the radial direction. A winding (not shown) is wound around the teeth 17. A terminal portion of the winding (not shown) is connected to the commutator 16.

The commutator 16 is a so-called disc type commutator having a commutator body 18 formed of resin and formed into a substantial disc shape. A plurality of segments 19 are arranged side by side in the peripheral direction on a surface 18a of the commutator body 18 opposite to the armature core 15. Risers 21 that are bent and extended toward the armature core 15 over an outer peripheral surface of the commutator body 18 are integrally formed with an outer end in the radial direction of the segment 19. One end of the winding (not shown) is connected to each riser 21.

Most of the armature 6 formed in this manner is covered with a resin mold portion 22. The resin mold portion 22 is formed into a substantially columnar shape. The resin mold portion 22 extends from a position closer to the pump portion 4 than the armature core 15 to a substantially center portion of the commutator body 18 in the axial direction. Only outer ends in the radial direction (outer peripheral surfaces) of the teeth 17 of the armature core 15 are exposed, and the winding (not shown) is buried in the resin mold portion 22. A round chamfered portion 22a is formed at a corner portion of an end of the resin mold portion 22 that is close to the pump portion 4. Accordingly, the end of the resin mold portion 22 that is close to the pump portion 4 is tapered.

The outlet cover 7 is formed into a substantially bottomed cylindrical shape having an opening portion 7a at the armature core 15 side. A bearing cylindrical portion 23 protruding toward the armature core 15 is integrally formed with a bottom portion 7b of the outlet cover 7 at a substantially center portion in the radial direction. An upper end portion 14a of the rotation shaft 14 is rotatably supported by the bearing cylindrical portion 23.

Brush holders 24 are integrally formed at two sides of the bearing cylindrical portion 23 at the bottom portion 7b of the outlet cover 7. Each of the brush holders 24 is formed into a box shape having an opening at the commutator 16 side. The brush 9 is accommodated in the brush holder 24 in a slidable manner along the axial direction. A coil spring 26 is accommodated in the brush holder 24 in a compressed and deformed state. The brush 9 is biased toward the commutator 16 by the coil spring 26. A tip end of the brush 9 protrudes from the brush holder 24 and is in sliding contact with the segment 19.

A terminal 27 that passes through the bottom portion 7b in an upper-lower direction is provided in the bottom portion 7b of the outlet cover 7. The brush 9 is connected to the terminal 27 via a pigtail (not shown). An external power supply (not shown) is connected to the terminal 27. Accordingly, external power is supplied to the winding (not shown) via the terminal 27, the pigtail (not shown), the brush 9, and the segment 19.

A discharge port 28 protruding upward is integrally formed with the bottom portion 7b of the outlet cover 7. The discharge port 28 is a portion from which fuel pumped up by the liquid supply device 1 is discharged, and is connected to a fuel flow path (not shown). An inner side and an outer side of the outlet cover 7 communicate with each other via the discharge port 28.

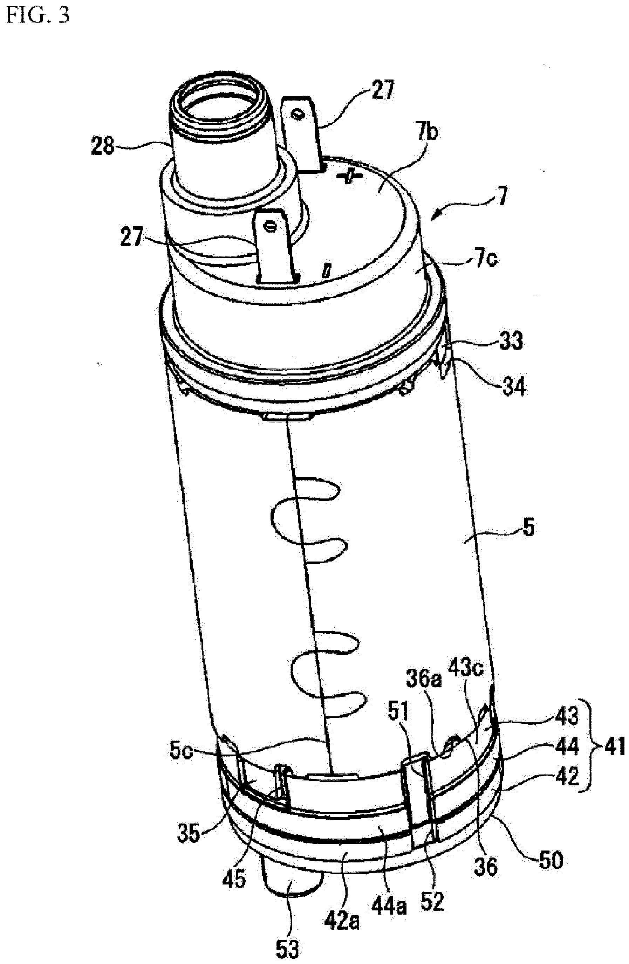

A positioning piece 32 extending downward is integrally formed with a peripheral wall 7c of the outlet cover 7. The positioning piece 32 is interposed between the permanent magnets 8 and positions the permanent magnets 8 (yoke 5) and the outlet cover 7. As shown in FIG. 3, a positioning protrusion portion 33 extending downward is integrally formed with the peripheral wall 7c of the outlet cover 7. An extending length of the positioning protrusion portion 33 is set to be fairly shorter than an extending length of the positioning piece 32. The positioning protrusion portion 33 positions the outlet cover 7 and the yoke 5 in the peripheral direction.

The peripheral wall 7c of the outlet cover 7 is formed with a fitting ridge portion 29 extending outward in the radial direction over the entire outer peripheral surface. An outer diameter of the fitting ridge portion 29 is set to be substantially the same as an inner diameter of the motor fitting portion 11 of the housing 2. An outer peripheral surface of the fitting ridge portion 29 is fitted to an inner peripheral surface of the motor fitting portion 11. A lower side of the fitting ridge portion 29 on the peripheral wall 7c of the outlet cover 7 serves as a spigot joint portion 31 to be spigot fitted to the yoke 5.

(Yoke)

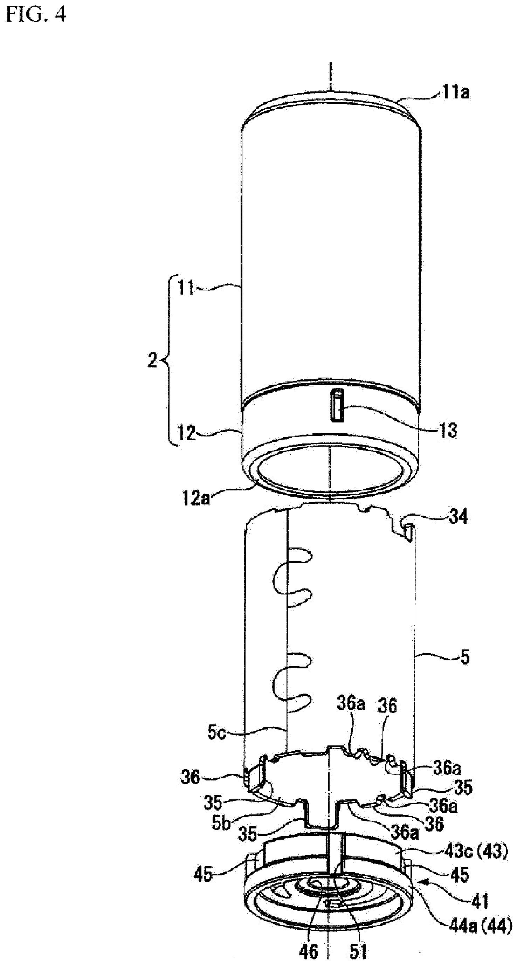

FIG. 3 is a perspective view of the liquid supply device 1 in a state where the housing 2 is removed. FIG. 4 is an exploded perspective view of the housing 2, the yoke 5, and a pump case 41 to be described later.

The yoke 5 serves as a magnetic path through which a magnetic flux of the permanent magnet 8 passes. As shown in FIGS. 2 to 4, the yoke 5 is formed by using a progressive press working device or the like. The yoke 5 is formed into a substantially cylindrical shape by bending a single metal plate by performing press working or the like. The yoke 5 has an abutting surface 5c where two ends in the peripheral direction (two ends in a longitudinal direction of one metal plate) abut against each other.

The upper opening 5a of the yoke 5 is fitted to an outer peripheral surface of the spigot joint portion 31 of the outlet cover 7. A yoke positioning recessed portion 34 into which the positioning protrusion portion 33 can be inserted is formed on a peripheral edge of the upper opening 5a of the yoke 5 at a position corresponding to the positioning protrusion portion 33 of the outlet cover 7. When the positioning protrusion portion 33 is inserted into the yoke positioning recessed portion 34, the outlet cover 7 and the yoke 5 are positioned in the peripheral direction.

A plurality of (three in the present embodiment) first positioning protrusions (first positioning protrusion in the claims) 35 are formed on a peripheral edge of a lower opening 5b of the yoke 5 at positions avoiding the abutting surface 5c and extend toward the pump portion 4. The first positioning protrusions 35 position the yoke 5 and the pump portion 4 in the peripheral direction.

A plurality of (three in the present embodiment) second positioning protrusions (second positioning protrusions in the claims) 36 are formed on the peripheral edge of the lower opening 5b of the yoke 5 at positions avoiding the abutting surface 5c. Recessed portions 36a are formed at two sides in the peripheral direction of portions of the peripheral edge of the lower opening 5b of the yoke 5 where the second positioning protrusions 36 are formed, so that the second positioning protrusions 36 protrude from the peripheral edge of the lower opening 5b toward the pump portion 4. The second positioning protrusions 36 are used to perform positioning relative to the progressive press working device or the like.

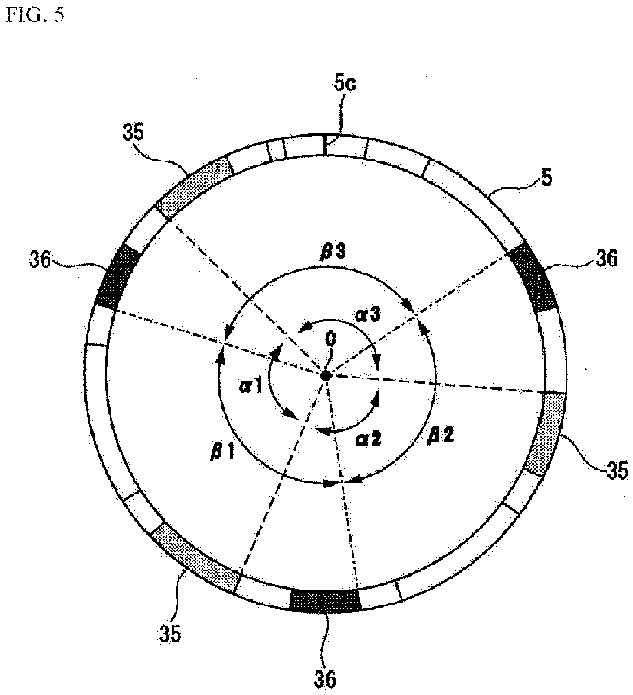

Here, a method of positioning the first positioning protrusions 35 and the second positioning protrusions 36 will be described in detail with reference to FIG. 5.

FIG. 5 is a plan view of the yoke 5 when viewed from the pump portion 4 side.

As shown in FIG. 5, arrangement positions of the first positioning protrusions 35 in the peripheral direction are set such that an angle $\alpha$ in the peripheral direction around an axial center C of the rotation shaft 14 between adjacent first positioning protrusions 35 satisfies the following formula, when the number of the first positioning protrusions 35 is N1.

$$\alpha = 360°/N1 \pm 30° \qquad (1)$$

In other words, the angle $\alpha$ is set so as to satisfy $360°/N1 - 30° \leq \alpha \leq 360°/N1 + 30°$. In the present embodiment, the number N1 of the first positioning protrusions 35 is three, and the first positioning protrusions 35 are arranged such that angles $\alpha 1$, $\alpha 2$, and $\alpha 3$ shown in FIG. 5 are approximately 120°.

Arrangement positions of the second positioning protrusions 36 in the peripheral direction are set such that an angle $\beta$ in the peripheral direction around the axial center C of the rotation shaft 14 between adjacent second positioning protrusions 36 satisfies the following formula, when the number of the second positioning protrusions 36 is N2.

$$\beta = 360°/N2 \pm 30° \qquad (2)$$

In other words, the angle $\beta$ is set so as to satisfy $360°/N2 - 30° \leq \beta \leq 360°/N2 + 30°$. In the present embodiment, the number N2 of the second positioning protrusions 36 is three, and the second positioning protrusions 36 are arranged such that the angles $\beta 1$, $\beta 2$, and $\beta 3$ shown in FIG. 5 are approximately 120°.

Further, the first positioning protrusions 35 and the second positioning protrusions 36 are disposed at positions that do not overlap with one another in any of the peripheral direction, the radial direction, and the axial direction while the first positioning protrusions 35 and the second positioning protrusions 36 respectively satisfy the above formulas (1) and (2).

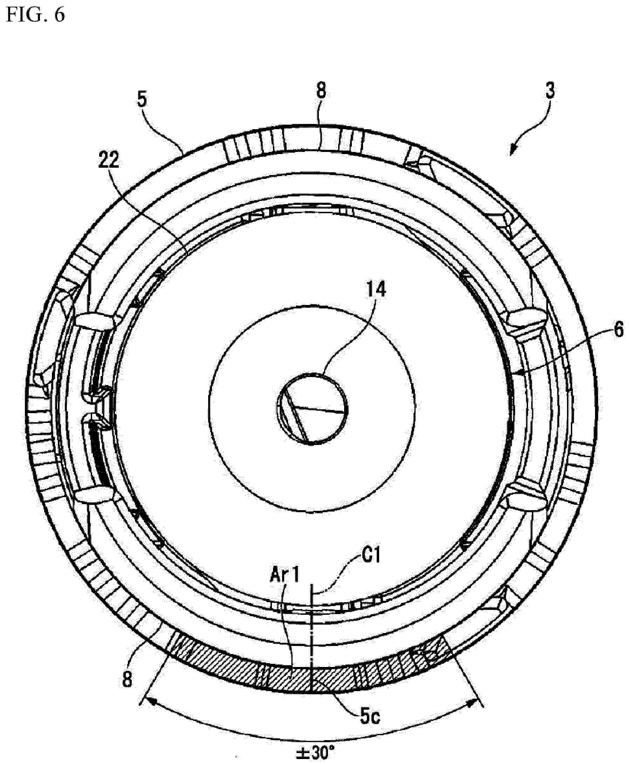

FIG. 6 is a plan view of the motor portion 3 when viewed from the pump portion 4 side (lower side).

As shown in FIGS. 2 and 6, two permanent magnets 8 are provided on an inner peripheral surface of the yoke 5. Each of the permanent magnets 8 is formed into a substantially semicircular shape along the inner peripheral surface of the yoke 5 when viewed from the axial direction. A length in the axial direction of the permanent magnet 8 is set to be longer than a length in the axial direction of an armature core 15. The permanent magnet 8 is disposed such that two ends in the axial direction of the permanent magnet 8 protrude (overhang) from two ends in the axial direction of the armature core 15. A magnetic field orientation of the permanent magnet 8 is along the radial direction (a thickness direction of the permanent magnet 8).

In this manner, the permanent magnets 8 are arranged to face each other in the radial direction around the rotation shaft 14. One of the two permanent magnets 8 is disposed such that a center C1 of the one permanent magnet 8 in the peripheral direction is located in a range Ar1 of ± 30° in the peripheral direction relative to the abutting surface 5c of the yoke 5. In other words, the center C1 of one of the permanent magnets 8 is disposed within a range in which an angle in the peripheral direction relative to the abutting surface 5c (that is, an angle of zero) is -30° or more and +30° or less. A minute gap is formed between an inner peripheral surface of the permanent magnet 8 and an outer end in the radial direction of the teeth 17 of the armature core 15.

(Pump Portion)

As shown in FIGS. 2 to 4, a lower end portion of the rotation shaft 14 is inserted into the pump portion 4.

A non-positive displacement type pump having an impeller 40 is used as the pump portion 4. The pump portion 4 includes the impeller 40 and the pump case 41 that is formed in a manner of covering the entire impeller 40. The pump case 41 is fitted to the pump fitting portion 12 of the housing 2.

The impeller 40 is a member formed of a resin material and formed into a substantial disc shape. A lower end portion 14b of the rotation shaft 14 is coupled to a substantially center portion in the radial direction of the impeller 40. Accordingly, the rotation shaft 14 and the impeller 40 are rotated integrally.

A plurality of blade portions (not shown) are formed at outer peripheral sides of an upper surface and a lower surface of the impeller 40. Portions among the plurality of blade portions pass through the lower surface and the upper surface of the impeller 40. Further, a fuel flow path hole (not shown) that passes through the lower surface and the upper surface of the impeller 40 is formed between the center in the radial direction of the impeller 40 and the blade portions.

(Pump Case)

The pump case 41 that covers the entire impeller 40 includes an upper case 43, a middle case 44, and a lower case 42.

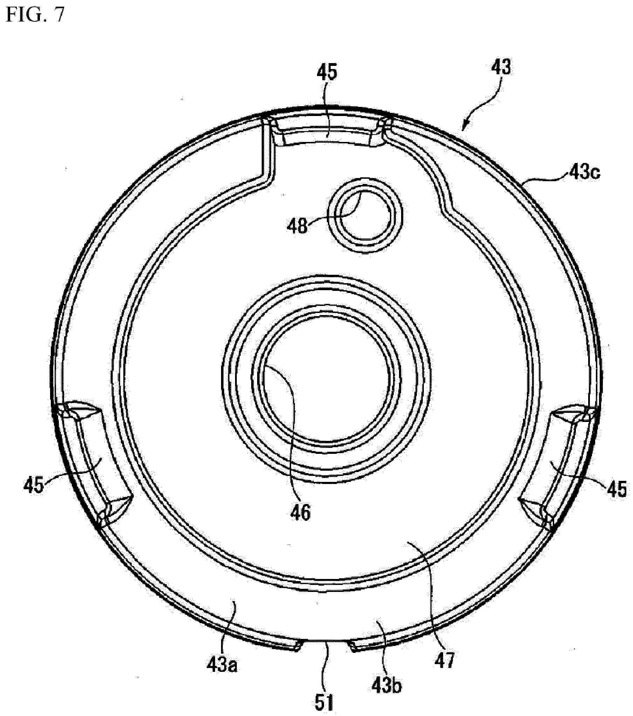

FIG. 7 is a plan view of the upper case 43 when viewed from above in the axial direction.

As shown in FIGS. 2 to 4 and FIG. 7, the upper case 43 is disposed on the impeller 40 at a side close to the motor portion 3. The upper case 43 is formed into a substantial disc shape in a manner of covering an upper surface of the impeller 40. The middle case 44 is joined to an outer peripheral portion of the upper case 43. An outer diameter of the upper case 43 is set to be slightly smaller than an outer diameter of the yoke 5.

An insertion hole 46 through which the lower end portion 14b of the rotation shaft 14 can be inserted is formed at a center portion in the radial direction of the upper case 43. A recessed portion 47 having a substantially annular shape when viewed in the axial direction is formed in an upper surface 43a of the upper case 43 in a manner of surrounding a periphery of the insertion hole 46. On the upper surface 43a of the upper case 43, an outer peripheral side of the recessed portion 47 serves as a contact surface 43b that is brought into contact with the yoke 5. A discharge port 48 that passes through the upper case 43 in an upper-lower direction is formed in the upper surface 43a of the upper case 43 near an outer peripheral portion of the recessed portion 47. Fuel is discharged from the discharge port 48 (details will be described later).

A plurality of (three in the present embodiment) first case positioning recessed portions (positioning recessed portions in the claims) 45 into which the first positioning protrusions 35 can be inserted are formed on an outer peripheral surface 43c of the upper case 43 at positions corresponding to the first positioning protrusions 35 of the yoke 5. Since the positions of the first case positioning recessed portions 45 correspond to the positions of the first positioning protrusions 35, the first case positioning recessed portions 45 are arranged at intervals of substantially 120° in the peripheral direction. The discharge port 48 is located in the vicinity of one of the three first case positioning recessed portions 45.

When the first positioning protrusions 35 are inserted into the first case positioning recessed portions 45, the yoke 5 is positioned relative to the pump case 41 in the peripheral direction. In a state where the first positioning protrusions 35 are inserted into the first case positioning recessed portions 45, a lower end of the yoke 5 (a peripheral edge of the lower opening 5b) is brought into contact with the contact surface 43b of the upper case 43. That is, the second positioning protrusions 36 of the yoke 5 are brought into contact with the contact surface 43b of the upper case 43. Accordingly, the yoke 5 is positioned relative to the pump case 41 in the axial direction.

The middle case 44 is formed into a substantial ring shape in a manner of surrounding an outer peripheral surface of the impeller 40. The middle case 44 is formed integrally with the upper case 43. An outer diameter of the middle case 44 is set to be slightly larger than the outer diameter of the upper case 43. The middle case 44 aligns a center in the radial direction of the impeller 40 with the axial center C of the rotation shaft 14. A thickness of the middle case 44 in the axial direction is substantially the same as or slightly larger than a thickness of the impeller 40 in the axial direction. Accordingly, predetermined clearances are respectively formed between the impeller 40 and the upper case 43 and between the impeller 40 and the lower case 42.

A second case positioning recessed portion (second positioning portion in the claims) 51 that extends in the axial direction is formed on the outer peripheral surface 43c of the upper case 43 and an outer peripheral surface 44a of the middle case 44. The second case positioning recessed portion 51 is formed so that the first positioning protrusion portion 13 of the housing 2 can be inserted into the second case positioning recessed portion 51. The second case positioning recessed portion 51 is disposed between the first case positioning recessed portions 45 that are adjacent to each other in the peripheral direction. More specifically, among the three first case positioning recessed portions 45, the first case positioning recessed portion 45 positioned in the vicinity of the discharge port 48 and the second case positioning recessed portion 51 are disposed at positions facing each other in the radial direction around the insertion hole 46 (the rotation shaft 14).

The lower case 42 is disposed below the impeller 40. The pump case 41 includes the upper case 43 integrally formed with the middle case 44 and the lower case 42, and covers the entire impeller 40.

The lower case 42 is formed into a substantial disc shape. An outer diameter of the lower case 42 is set to be substantially the same as an outer diameter of the middle case 44. A third case positioning recessed portion (second positioning portion in the claims) 52 that communicates with the second case positioning recessed portions 51 of the upper case 43 and the middle case 44 is formed on an outer peripheral surface 42a of the lower case 42. A width and a depth of the third case positioning recessed portion 52 in the peripheral direction are set to be substantially the same as a width and a depth of the second case positioning recessed portion 51 in the peripheral direction. Therefore, the third case positioning recessed portion 52 is formed so that the first positioning protrusion portion 13 of the housing 2 can be inserted into the third case positioning recessed portion 52.

The lower end portion 14b of the rotation shaft 14 is rotatably supported at a center portion in the radial direction of a lower surface 42b of the lower case 42. A fuel suction port 53 protruding downward is formed on an outer peripheral side of the lower surface 42b of the lower case 42. The fuel suction port 53 is formed into a cylindrical shape. An inner peripheral surface side of the fuel suction port 53 serves as a fuel passage. Fuel is suctioned into the pump case 41 through the fuel suction port 53.

A step portion 49 is formed on the outer peripheral edge of the lower surface 42b of the lower case 42. The step portion 49 is formed by reducing a diameter of the lower surface 42b of the lower case 42. The step portion 49 is formed at a position overlapping with the inner flange portion 12a of the housing 2 when viewed in the axial direction.

A square ring 50 serving as a seal member is mounted to the step portion 49. The square ring 50 is a member that has a substantially rectangular cross section and that is formed of a material having excellent oil resistance such as fluoro rubber. An outer diameter of the square ring 50 is set to be slightly smaller than an outer diameter of the lower case 42. Therefore, outer peripheral surfaces of the upper case 43, the middle case 44, and the lower case 42 are fitted to the pump fitting portion 12 of the housing 2. A minute gap is formed between an outer peripheral surface of the square ring 50 and an inner peripheral surface of the pump fitting portion 12 of the housing 2.

(Method of Assembling Liquid Supply Device)

Next, a method of assembling the liquid supply device 1 will be described.

First, the motor portion 3 and the pump portion 4 are assembled in advance. Then, the first positioning protrusion 35 of the yoke 5 is inserted into the first case positioning recessed portion 45 of the pump case 41. Accordingly, the motor portion 3 and the pump portion 4 are positioned in the peripheral direction.

Subsequently, a lower end of the yoke 5 is brought into contact with the contact surface 43b of the upper case 43. Accordingly, the motor portion 3 and the pump portion 4 are positioned in the axial direction, and the motor portion 3 and the pump portion 4 are integrated. Here, the contact surface 43b is formed on the upper surface 43a of the upper case 43, and a sufficient space is ensured for the contact surface 43b. Therefore, even when the lower end of the yoke 5 is brought into contact with the contact surface 43b, buckling deformation of the contact surface 43b and the yoke 5 does not occur.

Thereafter, the motor portion 3 and the pump portion 4 are fitted to an inner peripheral surface of the housing 2. At this time, the pump portion 4 and the motor portion 3 are inserted into the housing 2 in this order from an upper opening edge portion 11a of the motor fitting portion 11 of the housing 2. At this time, the first positioning protrusion portion 13 of the housing 2 is aligned with the second case positioning recessed portion 51 and the third case positioning recessed portion 52 of the pump case 41. Then, the motor portion 3 and the pump portion 4 are inserted into the housing 2 such that the first positioning protrusion portion 13 is inserted into the second case positioning recessed portion 51 and the third case positioning recessed portion 52. Accordingly, the motor portion 3 and the pump portion 4 are positioned relative to the housing 2 in the peripheral direction.

Here, the first positioning protrusion 35 of the yoke 5 and the first case positioning recessed portion 45 of the pump case 41 that are used for positioning the motor portion 3 and the pump portion 4 in the peripheral direction, and the first positioning protrusion portion 13 of the housing 2 and the second case positioning recessed portion 51 and the third case positioning recessed portion 52 of the pump case 41 that are used for positioning the housing 2 and the pump portion 4 (the motor portion 3) in the peripheral direction, are misaligned from one another in the peripheral direction. Therefore, positioning of the motor portion 3 and the pump portion 4 in the peripheral direction and positioning of the housing 2 and the pump portion 4 (motor portion 3) in the peripheral direction are performed independently of each other, and thus the positioning is performed stably.

The first positioning protrusion 35 and the second positioning protrusion 36 formed on the yoke 5 are formed in a manner of avoiding the abutting surface 5c of the yoke 5. In addition, an arrangement position of the first positioning protrusion 35 in the peripheral direction is set so as to satisfy the above formula (1). An arrangement position of the second positioning protrusion 36 in the peripheral direction is set so as to satisfy the above formula (2). Therefore, a fixing strength between the motor portion 3 and the pump portion 4 is dispersed in the peripheral direction in a well-balanced manner.

Thereafter, the square ring 50 mounted on the lower case 42 of the pump portion 4 is brought into contact with the inner flange portion 12a of the housing 2. The upper opening edge portion 11a of the motor fitting portion 11 is crimped inward in the radial direction from above the fitting ridge portion 29 of the outlet cover 7 while the square ring 50 is slightly crushed by the step portion 49 of the lower case 42 and the inner flange portion 12a. Accordingly, the pump portion 4 is fitted to the pump fitting portion 12 of the housing 2. The motor portion 3 is fitted to the motor fitting portion 11 of the housing 2. The housing 2, the motor portion 3, and the pump portion 4 are integrated. Further, a sealing property between the housing 2 and the pump portion 4 is ensured by the square ring 50. In this manner, assembling of the liquid supply device 1 is completed.

(Operation of Liquid Supply Device)

Next, an operation of the liquid supply device 1 will be described.

When the rotation shaft 14 of the motor portion 3 is rotated, the impeller 40 is rotated integrally with the rotation shaft 14. Then, fuel passes through the fuel flow path hole (not shown) of the impeller 40 and is pressure-fed from a lower side to an upper side of the impeller 40. Thereafter, the fuel is discharged into the yoke 5 of the motor portion 3 through the discharge port 48 of the upper case 43. The fuel discharged into the yoke 5 is pressure-fed to the discharge port 28 through a minute gap between the permanent magnet 8 and the resin mold portion 22 (an outer end in the radial direction of the teeth 17 of the armature core 15). Thereafter, the fuel is pressure-fed to an engine or the like (not shown) through the discharge port 28.

As described above, the upper surface 43a of the upper case 43 serves as the contact surface 43b with which the lower end of the yoke 5 is brought into contact in the embodiment described above. Therefore, even when the lower end of the yoke 5 is brought into contact with the contact surface 43b, buckling deformation of the contact surface 43b and the yoke 5 can be suppressed. In particular, even when the commutator 16 is a disc-shaped commutator and the brush 9 presses the commutator 16 in the axial direction by the coil spring 26 as in the present embodiment, buckling deformation of the contact surface 43b and the yoke 5 can be suppressed. For example, in a case where a configuration in which the upper case 43 is fitted to the inner peripheral surface of the yoke 5 is adopted, it is difficult to ensure a space for the contact surface 43b, and when the space is ensured for the contact surface 43b, a size of the upper case 43 is increased. On the other hand, a size of the liquid supply device 1 can be reduced in the embodiment described above.

The first positioning protrusion 35 of the yoke 5 and the first case positioning recessed portion 45 of the pump case 41 that are used for positioning the motor portion 3 and the pump portion 4 in the peripheral direction, and the first positioning protrusion portion 13 of the housing 2 and the second case positioning recessed portion 51 and the third case positioning recessed portion 52 of the pump case 41 that are used for positioning the housing 2 and the pump portion 4 (the motor portion 3) in the peripheral direction, are misaligned from one another in the peripheral direction. Therefore, positioning of the motor portion 3 and the pump portion 4 in the peripheral direction and positioning of the housing 2 and the pump portion 4 (motor portion 3) in the peripheral direction are performed independently of each other, and thus the positioning can be performed stably.

Further, the first positioning protrusion 35 and the second positioning protrusion 36 formed on the yoke 5 are formed in a manner of avoiding the abutting surface 5c of the yoke 5. In addition, an arrangement position of the first positioning protrusion 35 in the peripheral direction is set so as to satisfy the above formula (1). An arrangement position of the second positioning protrusion 36 in the peripheral direction is set so as to satisfy the above formula (2). Therefore, a fixing strength between the motor portion 3 and the pump portion 4 is dispersed in the peripheral direction in a well-balanced manner. Since there is a term "$\pm$ 30° " in the above formulas (1) and (2), within this range, the fixing strength between the motor portion 3 and the pump portion 4 can be dispersed in the peripheral direction in a well-balanced manner.

Therefore, it is possible to stabilize the fixing strength of the motor portion 3 and the pump portion 4 relative to the housing 2.

One of the two permanent magnets 8 is disposed such that the center C1 in the peripheral direction is located in a range Ar1 of $\pm$ 30° in the peripheral direction relative to the abutting surface 5c of the yoke 5. Since a magnetic field orientation of the permanent magnet 8 is along the radial direction (a thickness direction of the permanent magnet 8), a magnetic flux density at two ends in the peripheral direction is larger than a magnetic flux density at the center in the peripheral direction. Therefore, an effective magnetic flux of the permanent magnet 8 can be utilized to the maximum extent by making the abutting surface 5c of the yoke 5 that is likely to block a magnetic path and the center C1 in the peripheral direction of the permanent magnet 8 coincide with each other as much as possible. Therefore, motor performance of the motor portion 3 can be improved.

Three first positioning protrusions 35, three second positioning protrusions 36, and three first case positioning recessed portions 45 are provided. The second case positioning recessed portion 51 is disposed at a position facing the first case positioning recessed portion 45 in the vicinity of the discharge port 48, among the three first case positioning recessed portions 45, in the radial direction around the insertion hole 46. Therefore, it is possible to reliably stabilize the fixing strength of the yoke 5 and the pump case 41 relative to the housing 2 while positioning the housing 2, the yoke 5, and the pump case 41. In addition, the motor performance of the motor portion 3 can be reliably improved.

When the housing 2 and the pump case 41 are positioned in the peripheral direction, the housing 2 is pressed from an outer side in the radial direction by press working or the like to form the first positioning protrusion portion 13. Further, the pump case 41 is formed with recessed portions (the second case positioning recessed portion 51 and the third case positioning recessed portion 52) into which the first positioning protrusion portion 13 is inserted. In this manner, the housing 2 that has a substantially cylindrical shape and that is formed of metal is easily formed with a protrusion portion (the first positioning protrusion portion 13) by performing press working or the like. On the other hand, when the recessed portions (the second case positioning recessed portion 51 and the third case positioning recessed portion 52) are formed in the pump case 41, various processing methods such as forging, heading, and casting can be adopted. Therefore, manufacturing costs of the liquid supply device 1 can be reduced, and variations of a manufacturing method of the liquid supply device 1 can be increased.

The present invention is not limited to the embodiment described above, and includes various modifications of the embodiment described above without departing from the scope of the appended claims.

For example, the liquid supply device 1 used as a fuel pump for a vehicle such as a motorcycle or a four-wheeled vehicle, is described in the embodiment described above. However, the configuration in the embodiment described above can be applied to a configuration in which the pump portion 4 is not provided and in which the motor portion 3 is provided with a bracket or the like. In this case, the pump case 41 in the embodiment described above may be used as a bracket. More specifically, the upper case 43 may be used as a bracket, and the bracket may have the contact surface 43b and the outer peripheral surface 43c.

Further, a case where three first positioning protrusions 35, three second positioning protrusions 36, and three first case positioning recessed portions 45 are provided, is described in the embodiment described above. However, the number is not limited to three and may be three or more. When the number of the first positioning protrusions 35 is N1, it is sufficient that the arrangement positions of the first positioning protrusions 35 in the peripheral direction satisfy the above formula (1). When the number of the second positioning protrusions 36 is N2, it is sufficient that the arrangement positions of the second positioning protrusions 36 in the peripheral direction satisfy the above formula (2). In addition, it is sufficient that the first positioning protrusions 35 and the second positioning protrusions 36 are disposed at positions that do not overlap with one another in anyof the peripheral direction, the radial direction, and the axial direction. In addition, it is desirable that one of a plurality of first case positioning recessed portions 45, the second case positioning recessed portion 51, and the third case positioning recessed portion 52 of the pump case 41 are positioned to face one another in the radial direction around the insertion hole 46 (the rotation shaft 14).

For example, a brush-equipped motor adopted as the motor portion 3 is described in the embodiment described above. However, the present invention is not limited thereto, and for example, a brushless motor may be adopted as the motor portion 3.

The present application is based on a Japanese Patent Application No. 2019-005221, filed on January 16, 2019.

INDUSTRIAL APPLICABILITY

According to the motor unit and the liquid supply device of the present invention, for example, it is possible to stabilize a fixing strength relative to the housing while performing positioning for each portion, and it is possible to improve motor performance. The present invention that has such an effect is useful for, for example, a fuel pump for a vehicle such as a motorcycle or a four-wheeled vehicle.

REFERENCE SIGNS LIST

| | |
|---|---|
| 1 | liquid supply device |
| 2 | housing |
| 3 | motor portion (motor unit) |
| 4 | pump portion |
| 5 | yoke |
| 8 | permanent magnet |
| 13 | first positioning protrusion portion (first positioning portion) |
| 14 | rotation shaft |
| 35 | first positioning protrusion |
| 36 | second positioning protrusion |
| 41 | pump case (motor unit, case) |
| 43 | upper case (bracket) |
| 43a | upper surface (one end portion) |
| 45 | first case positioning recessed portion (positioning recessed portion) |
| 51 | second case positioning recessed portion (second positioning portion) |
| 52 | third case positioning recessed portion (second positioning portion) |
| Ar1 | range |
| C1 | center in the peripheral direction |

**Claims**

**1.** A motor unit comprising:

a housing (2) having a cylindrical shape;
a bracket that has a disc shape and that is fitted to an inner peripheral surface of the housing (2); and
a motor portion (3) disposed in the housing (2) and disposed coaxially with the bracket,
wherein the motor portion (3) includes:

a yoke (5) that is fitted to the inner peripheral surface of the housing (2) and that is formed of a single metal plate bent into a cylindrical shape, and
a plurality of permanent magnets (8) disposed on an inner peripheral surface of the yoke (5),

wherein an end surface in an axial direction of the bracket and one end portion of the yoke (5) at a side of the bracket are brought into contact with each other,
**characterized in that**
the housing (2) includes a first positioning portion that is formed at a position corresponding to the bracket and that is configured to position the housing (2) and the bracket,
wherein the yoke (5) includes:

a plurality of first positioning protrusions (35) that are provided in a manner of protruding from the one end portion toward the side of the bracket at positions avoiding an abutting surface of the metal plate, and that is configured to position relative to the bracket, and

a plurality of second positioning protrusions (36) that are provided in a manner of protruding from the one end portion toward the side of the bracket at positions avoiding the abutting surface, and that is configured to position relative to a device that is configured to convey the yoke (5),

wherein the bracket includes:

a second positioning portion configured to be engaged with the first positioning portion, and
a plurality of positioning recessed portions into which the plurality of first positioning protrusions (35) are respectively inserted,

wherein the second positioning portion and one of the plurality of positioning recessed portions are distributed and arranged at two sides of a rotation shaft (14) of the motor portion (3),
wherein when the number of the first positioning protrusions (35) is set to N1, an angle in a peripheral direction between the adjacent first positioning protrusions (35) around the rotation shaft (14) is 360°/N1 - 30° or more and 360°/N1 + 30° or less,
wherein when the number of the second positioning protrusions (36) is set to N2, an angle in the peripheral direction between the adjacent second positioning protrusions (36) is 360°/N2 - 30° or more and 360°/N2 + 30° or less, and
wherein the first positioning protrusions (35), the second positioning protrusions (36), and the first positioning portion are disposed at positions that do not overlap with one another in any of the peripheral direction, a radial direction, and the axial direction.

**2.** The motor unit according to claim 1,

wherein each of the number of the first positioning protrusions (35), the number of the second positioning protrusions (36), and the number of the positioning recessed portions is three, and
wherein one of the three positioning recessed portions and the second positioning portion are disposed in a manner of facing each other in the radial direction around the rotation shaft (14).

**3.** The motor unit according to claim 1 or 2,

wherein the first positioning portion is a protrusion portion that protrudes from the inner peripheral surface of the housing (2), and
wherein the second positioning portion is a recessed portion into which the first positioning portion is inserted.

**4.** The motor unit according to any one of claims 1 to 3, wherein a center of the permanent magnet (8) in the peripheral direction is located in a range in which an angle in the peripheral direction relative to the abutting surface of the metal plate is -30° or more and +30° or less.

**5.** A liquid supply device comprising:

the motor unit according to any one of claims 1 to 4; and
a pump portion (4) that is configured to be driven by the motor portion (3) and that is configured to pressure-feed liquid,
wherein the bracket is a case of the pump portion (4).

**Patentansprüche**

**1.** Motoreinheit, welche aufweist:

ein Gehäuse (2), welches eine zylindrische Form hat;
einen Bügel, der eine Scheibenform hat und der an einer Innenumfangsfläche des Gehäuses (2) angebracht ist, sowie
einen Motorbereich (3), der in dem Gehäuse (2) angeordnet und koaxial mit dem Bügel angeordnet ist,
wobei der Motorbereich (3) umfasst:

ein Joch (5), welches an der Innenumfangsfläche des Gehäuses (2) angebracht und aus einer einzigen zylinderförmig gebogenen Metallplatte ausgebildet ist, und
eine Vielzahl von Permanentmagneten (8), die an einer Innenumfangsfläche des Jochs (5) angeordnet sind,
wobei eine Endfläche in Axialrichtung des Bügels und ein Endbereich des Jochs (5) an einer Seite des Bügels miteinander in Kontakt gebracht werden,
**dadurch gekennzeichnet, dass**
das Gehäuse (2) einen ersten Positionierbereich aufweist, der in einer zu dem Bügel korrespondierenden Position ausgebildet ist und der zu einer Positionierung des Gehäuses (2) und des Bügels vorgesehen ist,
wobei das Joch (5) aufweist:

eine Vielzahl von ersten Positionierungsvorsprüngen (35), die so ausgebildet sind, dass sie von dem einen Endbereich in Richtung der Seite des Bügels hervorragen, und zwar in derartigen Positionen, dass sie einer Anschlagfläche der Metallplatte ausweichen, und die zu einer Positionierung relativ zu dem Bügel ausgebildet sind, sowie eine Vielzahl von zweiten Positionierungsvorsprüngen (36), die so ausgebildet sind, dass sie von dem einen Endbereich in Richtung der Seite des Bügels hervorragen, und zwar in derartigen Positionen, dass sie der Anschlagfläche ausweichen, und die zu einer Positionierung relativ zu einer zum Transport des Jochs (5) vorgesehenen Vorrichtung vorgesehen sind,
wobei der Bügel aufweist:

einen zweiten Positionierbereich, der zu einem Eingriff mit dem ersten Positionierbereich vorgesehen ist, und
eine Vielzahl von ausgesparten Positionierbereichen, in welche die Vielzahl von ersten Positionierungsvorsprüngen (35) jeweils eingesetzt sind,
wobei der zweite Positionierbereich und einer von der Vielzahl von ausgesparten Positionierbereichen an zwei Seiten einer Rotationswelle (14) des Motorbereichs (3) verteilt und angeordnet sind,
wobei, wenn die Anzahl der ersten Positionierungsvorsprünge (35) auf N1 gesetzt ist, ein Winkel in Umfangsrichtung zwischen den benachbarten ersten Positionierungsvorsprüngen (35) um die Rotationswelle (14) 360°/N1 - 30° oder mehr und 360°/N1 + 30° oder weniger beträgt,
wobei, wenn die Anzahl der zweiten Positionierungsvorsprünge (36) auf N2 gesetzt ist, ein Winkel in Umfangsrichtung zwischen den benachbarten zweiten Positionierungsvorsprüngen (36) um die Rotationswelle (14) 360°/N2 - 30° oder mehr und 360°/N2 + 30° oder weniger beträgt und
wobei die ersten Positionierungsvorsprünge (35), die zweiten Positionierungsvorsprünge (36) und der erste Positionierbereich in Positionen angeordnet sind, die weder in der Umfangsrichtung, noch in einer Radialrichtung, noch in der Axialrichtung miteinander überlappen.

**2.** Motoreinheit nach Anspruch 1,

wobei die Anzahl der ersten Positionierungsvorsprünge (35), die Anzahl der zweiten Positionierungsvorsprünge (36) und die Anzahl der ausgesparten Positionierbereiche jeweils drei beträgt und
wobei einer der drei ausgesparten Positionierbereiche und der zweite Positionierbereich derart angeordnet sind, dass sie in der Radialrichtung um die Rotationswelle (14) einander gegenüberliegen.

**3.** Motoreinheit nach Anspruch 1 oder 2,

wobei der erste Positionierbereich ein Vorsprungbereich ist, der von der Innenumfangsfläche des Gehäuses (2) hervorragt, und
wobei der zweite Positionierbereich ein ausgesparter Bereich ist, in den der erste Positionierbereich eingesetzt wird.

**4.** Motoreinheit nach einem der Ansprüche 1 bis 3, wobei eine Mitte des Permanentmagneten (8) in der Umfangsrichtung in einem Bereich angeordnet ist, in dem ein Winkel in Umfangsrichtung relativ zu der Anschlagfläche der Metallplatte - 30° oder mehr und + 30° oder weniger beträgt.

**5.** Flüssigkeitsversorgungsvorrichtung, welche aufweist:

die Motoreinheit nach einem der Ansprüche 1 bis 4 sowie
einen Pumpenbereich (4), der dazu vorgesehen ist, mittels des Motorbereichs (3) angetrieben zu werden, und der dazu vorgesehen ist, Flüssigkeit unter Druck zu befördern,
wobei der Bügel ein Gehäuse des Pumpenbereichs (4) ist.

**Revendications**

**1.** Unité-moteur, comprenant :

un boîtier (2) ayant une forme cylindrique ;
un étrier ayant une forme de disque et monté sur une surface intérieure circonférentielle du boîtier (2) ; et
une partie-moteur (3) disposée dans le boîtier (2) et disposée coaxialement avec l'étrier,
la partie-moteur (3) incluant :

une culasse (5) montée sur la surface intérieure circonférentielle du boîtier (2) et formée d'une seule plaque en métal courbée dans une forme cylindrique, et
une pluralité d'aimants permanents (8) disposés sur une surface intérieure circonférentielle de la culasse (5),
où une surface finale dans un sens axial de l'étrier et une partie finale de la culasse (5) sur un côté de l'étrier sont contactées l'une avec l'autre,
**caractérisée en ce que**
le boîtier (2) comprend une première partie de positionnement qui est formée dans une position correspondant à l'étrier et qui est conçue pour positionner le boîtier (2) et l'étrier,
la culasse (5) incluant :

une pluralité de premières saillies de positionnement (35) fournies de telle manière qu'elles projètent à partir de l'une partie finale vers le côté de l'étrier dans des positions évitant une surface jouxtante de la plaque en métal, et conçues pour un positionnement par rapport à l'étrier, et
une pluralité de deuxièmes saillies de positionnement (36) fournies d'une telle manière qu'elles projètent de l'une partie finale vers le côté de l'étrier dans des positions évitant la surface jouxtante, et conçues pour un positionnement par rapport à un dispositif conçu pour transporter la culasse (5),
l'étrier comprenant :

une deuxième partie de positionnement destinée à être engrenée avec la première partie de positionnement, et
une pluralité de parties évidées de positionnement dans lesquelles la pluralité de premières saillies de positionnement (35) sont respectivement insérées,
où la deuxième partie de positionnement et l'une de la pluralité de parties évidées de positionnement sont distribuées et disposées sur deux côtés d'un arbre rotatif (14) de la partie-moteur (3),
où, si le nombre des premières saillies de positionnement (35) est mis à N1, un angle dans un sens circonférentiel entre les premières saillies de positionnnement jouxtantes (35) autour de l'arbre rotatif (14) est
360°/N1 - 30° ou plus, et 360°/N1 + 30° ou moins,
où, si le nombre des deuxièmes saillies de positionnement (36) est mis à N2, un angle dans le sens circonférentiel entre les deuxièmes saillies de positionnement (36) jouxtantes est 360°/N2 - 30° ou plus, et 360°/N2 + 30° ou moins,
où les premières saillies de positionnement (35), les deuxièmes saillies de positionnement (36) et la première partie de positionnement sont disposées en positions qui ne se chevauchent pas dans aucune des suivants : le sens circonférentiel, un sens radial et le sens axial.

**2.** Unité-moteur selon la revendication 1,

où chacun du nombre des premières saillies de positionnement (35), du nombre des deuxièmes saillies de positionnement (36) et le nombre des parties évidées de positionnement est trois, et
où l'une des trois parties évidées de positionnement et la deuxième partie de positionnement sont disposées de telle manière qu'elles s'opposent dans le sens radial autour de l'arbre rotatif (14).

**3.** Unité-moteur selon la revendication 1 ou 2,

où la première partie de positionnement est une partie saillante qui projète de la surface intérieure circonférentielle du boîtier (2) et
où la deuxième partie de positionnement est une partie évidée dans laquelle la première partie de positionnement est insérée.

**4.** Unité-moteur selon l'une des revendications 1 à 3, où un centre de l'aimant permanent (8) dans le sens circonférentiel est situé dans une gamme dans laquelle un angle dans le sens circonférentiel par rapport à la surface jouxtante de la plaque en métal est - 30° ou plus et + 30° ou moins.

**5.** Dispositif d'alimentation en liquide, comprenant :

l'unité-moteur selon l'une des revendications 1 à 4 ; et
une partie-pompe (4) conçue pour être entrainée par la partie-moteur (3) et conçue pour alimenter du liquide sous pression,
où l'étrier est une carcasse de la partie-pompe (4).

FIG. 1

28
1
27
7b
27
7
11a
7c
11
2
12
13
12a
53
42b
42 (41)

FIG. 2

14a
19
26
27
24
9
7
23
7c
11a
14
29
18a
18 (16)
31
5a
7a
6
22
3
21
32
5
17 (15)
8
8
45
11
2
22a
43a
45
43c
12
43
4
44
41
44a
40
42
49
50
5b
14b
42a
13
12a
42b
53

FIG. 3

27
28
7b
7
27
7c
33
34
5
36a
43c
51
43
5c
44
41
42
35
50
45
36
44a
52
42a
53

FIG. 4

11a
11
2
12
13
12a
34
5
36a
36
5c
36
36a
35
35
36a
5b
36
35
36a
43c (43)
45
45
41
44a (44)
46
51

FIG. 5

5c
35
5
36
β3
36
α3
C
α1
β1
α2
β2
35
35
36

FIG. 6

5
8
3
22
14
6
C1
Ar1
8
5c
±30°

FIG. 7

45
43
43c
48
46
45
45
43a
51
43b
47

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010183798 A
- JP 2019005221 A